# EUROPEAN PATENT SPECIFICATION

(11) **EP 4 429 865 B1**
(45) Date of publication and mention of the grant of the patent: **09.07.2025**
(21) Application number: 22817818.2
(22) Date of filing: 11.11.2022
(51) Int. Cl.: B29C 45/54

(54) **INJECTION APPARATUS FOR PRODUCING HOLLOW PLASTIC ARTICLES, IN PARTICULAR BOTTLE PREFORMS**
INJEKTIONSVORRICHTUNG ZUR HERSTELLUNG VON HOHLKÖRPERN AUS KUNSTSTOFF, INSBESONDERE FLASCHENVORFORMLINGEN
APPAREIL D'INJECTION POUR LA PRODUCTION D'ARTICLES CREUX EN PLASTIQUE, EN PARTICULIER DE PRÉFORMES DE BOUTEILLE

(30) Priority: 12.11.2021 IT 202100028796
(43) Date of publication of application: 18.09.2024
(73) Proprietor: S.I.P.A. Società Industrializzazione Progettazione e Automazione S.p.A., 31029 Vittorio Veneto (IT)
(72) Inventor: MENEGOL, Elvis, 32020 Limana (IT); ZOPPAS, Matteo, 31015 Conegliano (IT)
(74) Representative: de Alteriis, Renato
(86) International application number: PCT/IB2022/060874
(87) International publication number: WO 2023/084463

(56) References cited:
- WO-A1-2004/050325
- WO-A1-2011/103675
- WO-A1-98/41381
- US-A1- 2007 052 124
- US-B2- 10 543 627

## Description

### Field of the invention

The present invention relates to the field of molding hollow plastic articles, such as bottle preforms, for example.

In particular, the invention relates to an injection apparatus particularly adapted to inject molten plastic from a plasticization apparatus which can generate a substantially continuous flow of molten plastic. The molten plastic can be produced from plastic, such as PET, for example, in the form of *flakes.*

### Background art and background of the invention

In order to produce bottle preforms, an apparatus comprising an extruder and only one injector is usually used.

The forward and backward movements of the screw of the extruder and the piston of the injector are asynchronous.

In fact, while the screw rotates and moves backward along the longitudinal axis thereof while melting the granules, typically of PET, and accumulating the volume of molten plastic needed for the subsequent injection (plasticization step), the piston moves forward to inject the molten plastic into the mold (injection step); and vice versa, while the screw rotates and moves forward along the longitudinal axis thereof to transfer the molten plastic produced in the plasticization step (transfer step), the piston moves backward so that the injector is filled with molten plastic (loading step). Thus, the flow of molten plastic produced by the extruder is discontinuous.

This is the standard process carried out when the raw material to be melted by the extruder is in the form of pellets or granules, in particular when the raw material is virgin PET or, in case of recycled and recast material, rPET.

The use of material in the form of flakes is increasingly requested, the flakes being obtained by grinding preforms and bottles, without melting them.

In order to produce preforms from PET flakes, a plasticization apparatus is required, comprising the extruder designed to have a different operation from that previously described.

Unlike PET pellets, the PET flakes, due to the smaller apparent density thereof, can require a particular plasticization process, where the screw does not move forward/backward as described above, but operates in a mode referred to as a *pure extruding* mode. Basically, the screw rotates at a constant speed without moving forward/backward along the longitudinal axis thereof.

This results in a flow of molten plastic exiting the plasticization apparatus being substantially continuous and constant, and no longer discontinuous as in the previously described process.

Thus, as the flow exiting the extruder is continuous, two injectors are needed.

In particular, downstream of the extruder, two injectors alternatively receive the molten plastic from the extruder. More in particular, the apparatus is designed so that while a first injector is injecting the molten plastic into the mold, a second injector receives the molten plastic from the extruder, and vice versa.

However, disadvantageously, there can be conditions such that the molten plastic is prevented from entering into both injectors simultaneously.

US 2007/052124 A1 discloses an injection apparatus for injecting molten plastic into a mold, a first injector and a second injector adapted to receive molten plastic and inject it into a mold, a conduit adapted to carry molten plastic from a plasticizing apparatus towards the first injector and towards the second injector and a third injector provided with a piston, the third injector being connected to the conduit so as to receive molten plastic from the conduit and then inject it into the conduit. WO 2011/103675 A1 discloses an injection molding apparatus comprising two injectors which are adapted to inject molten plastic into the same mold through the same nozzle. The apparatus of D4 is configured so that after the injection of molten plastic into the mold with the first injector, the mold is opened and closed again, so that the second injector can inject molten plastic.

The Applicant has developed an injection apparatus comprising two injectors.

Such an apparatus comprises a conduit adapted to carry the molten plastic from the plasticization apparatus towards the two injectors.

Furthermore, such an injection apparatus comprises two valves, in particular a valve for each injector.

Each valve is adapted to allow or prevent the entry of molten plastic into the respective injector as a function of the position or configuration thereof.

The apparatus is designed so that while one of the two valves allows the molten plastic to enter into the respective injector, the other valve prevents the molten plastic from entering into the respective injector.

However, disadvantageously, there can be conditions such that both valves simultaneously prevent the molten plastic from entering into the respective injector, e.g., during the switching of the valve position.

It is possible that, when both valves prevent the molten plastic from entering into the respective injector, a hydraulic shock or fluid hammer occurs in the conduit connecting the injection apparatus to the plasticization apparatus.

The occurring pressure peak can damage one or more components of the plasticization apparatus, in particular the molten plastic pump arranged fluidly downstream of the extruder and upstream of the aforesaid conduit. Therefore, the molten plastic pump, which should operate with constant pressure downstream, can be damaged or in any case the operating life thereof is reduced.

The need is felt to avoid hydraulic shocks occurring in the conduit adapted to connect the injection apparatus to the plasticization apparatus when the molten plastic is prevented from entering into both injectors adapted to operate alternately to each other.

It is also desirable to be able to avoid hydraulic shocks from occurring, and also to be able to avoid the molten plastic from degrading.

In fact, the degradation of the molten plastic can lead to the formation of undesired volatile compounds, such as acetaldehyde and benzene.

Being able to avoid the degradation of molten plastic is not trivial, especially when carrying out a preform production process from PET in the form of flakes.

### Summary of the invention

It is an object of the present invention to provide an injection apparatus for producing hollow articles, e.g., bottle preforms, in particular from plastic to be melted in the form of flakes, which allows avoiding hydraulic shocks from occurring in the conduit adapted to connect the injection apparatus to the plasticization apparatus.

In particular, it is an object of the present invention to avoid hydraulic shocks from occurring in the conduit adapted to connect the injection apparatus to the plasticization apparatus if a condition occurs, in which the molten plastic is prevented from entering into both injectors adapted to operate alternately to each other.

It is another object of the present invention to also be able to avoid the degradation of the molten plastic, in particular of the molten PET.

The present invention achieves at least one of the aforesaid objects, and other objects which will become apparent in light of the present description, by an injection apparatus for injecting molten plastic according to claim 1.

The invention also relates to a molding apparatus, in particular according to claim 13.

The invention also relates to a molding process, in particular according to claim 14.

Advantageously, an injection apparatus according to the invention allows avoiding hydraulic shocks from occurring in the conduit adapted to connect the injection apparatus to the plasticization apparatus.

In fact, the third injector is capable of receiving, an amount of molten plastic from the plasticization apparatus to avoid a fluid hammer from occurring.

Advantageously, an injection apparatus according to the invention allows avoiding hydraulic shocks also when the plasticization apparatus is configured to dispense a continuous or substantially continuous flow of molten plastic, such as a plasticization apparatus loaded with plastic flakes, for example.

The injection apparatus preferably comprises two valves, in particular a valve for each injector; and each valve is adapted to allow or prevent the entry of molten plastic into the respective injector as a function of the position or configuration thereof.

Advantageously, the third injector can receive the molten plastic for the time strictly required for one of the two valves to be in a condition in which it allows the molten plastic to enter into the respective injector, in particular for the time strictly required for one of the two valves to be completely switched to the position allowing the molten plastic to enter into the respective injector.

In particular, the third injector is not destined to have a loading amount, referred to as *shot size,* equal to that of the first injector and the second injector, but only a fraction with respect to the loading amount of each of them.

The first injector and the second injector can be referred to as main injectors, and the third injector can be referred to as auxiliary injector.

Advantageously, an apparatus according to the invention allows reducing the harmful pressure fluctuations inside the conduit adapted to be connected to the plasticization apparatus to receive the molten plastic.

It is particularly preferable that actuation means are provided, e.g., a hydraulic cylinder, adapted to cause the piston of the third injector to move forward, to inject the molten plastic into the conduit adapted to receive the molten plastic from the plasticization apparatus. The residence time of the molten plastic in the third injector is thus minimized. Thus, the risk that the molten plastic at high temperature degrades is avoided, the degradation causing the generation of spots of burnt material which would circulate and contaminate the molded articles.

It is particularly preferable that said actuation means are adapted to control the backward movement of the piston of the third injector while it receives the molten plastic from the conduit. In fact, controlling the backward movement of the piston of the third injector allows avoiding or in any case minimizing the formation of bubbles in the molten plastic. For the production of bottle preforms, in particular made of PET, the formation of bubbles is particularly undesired. Instead, it is desired that the molten plastic remains as compact as possible. An uncontrolled speed of the piston of the third injector can lead to the formation of air bubbles in the molten plastic.

In order to avoid the formation of bubbles optimally, it is particularly preferable that the injection apparatus is configured to control the backward movement of the piston of the third injector while it receives the molten plastic, so that the pressure of the molten plastic in the third injector is constant or substantially constant during the backward movement of the piston of the third injector.

An injection apparatus according to the invention allows avoiding or minimizing the degradation of the molten plastic, in particular of the molten PET.

The inventors have found that the length of the conduit carrying the molten plastic from the plasticization apparatus to the injectors significantly affects the degradation of the molten plastic.

In particular, the inventors have found that a too long conduit increases the residence time of the molten plastic at high temperature, leading to a degradation of the molten plastic.

Therefore, it is preferable to select the length of the aforesaid conduit so that it is lower than the length of each of the main injectors, so as to reduce the residence time of the molten plastic at high temperature in the conduit. Therefore, it is possible to minimize the degradation of the molten plastic.

The aforesaid third injector is particularly advantageous in the optional variants in which the length of the aforesaid conduit is shorter than the length of each of the main injectors. In fact, without the third injector, when the conduit is short, the aforesaid problem of the fluid hammer can be accentuated with respect to a longer conduit.

Further features and advantages of the invention will become more apparent in light of the detailed description of exemplary, but non-exclusive embodiments.

The dependent claims describe particular embodiments of the invention.

### Brief description of the drawings

In the description of the invention, reference is made to the accompanying drawings, which are provided by way of a non-limiting example, in which:
Figure 1 shows a perspective view of an injection apparatus according to the invention;
Figure 2 shows a side view of the injection apparatus according to Figure 1;
Figure 3 shows a side view of some components shown in Figure 1;
Figure 4 shows a top view of part of the components in Figure 3;
Figure 5 shows a perspective view of part of the components in Figure 3;
Figure 6 shows section A-A in Figure 4;
Figure 7 shows a perspective view of a section on two planes transverse to each other of part of the components in Figure 3, in a first configuration of the injection apparatus;
Figure 8 shows another perspective view of a section on two planes transverse to each other of part of the components in Figure 3, in a second configuration of the injection apparatus;
Figure 9 shows section B-B in Figure 3, when the injection apparatus is in a configuration in which the first injector is injecting and the second injector is loading, as in Figure 7;
Figure 10 shows a side view of a molding apparatus according to the invention, where the plasticization apparatus is shown diagrammatically.

The same elements or components have the same reference numeral.

### Description of exemplary embodiments of the invention

With reference to the Figures, exemplary embodiments of an injection apparatus 100 or injection machine, according to the invention are described.

In particular, the injection apparatus 100 is for molding hollow articles, in particular preforms, more in particular bottle preforms.

In fact, the injection apparatus 100 is adapted to inject molten plastic, in particular molten PET, into a mold (not shown) of one or more hollow articles, such as bottle preforms. The mold can be provided, for example, with a plurality of molding cavities, each for a respective hollow article, e.g., each for a respective preform.

The injection apparatus 100 is suitable for injecting the molten plastic (or molten polymer) produced from the plasticization of polymer material, e.g., PET (Polyethylene terephthalate), in particular in the form of flakes.

In all embodiments, the injection apparatus 100 comprises
- an injector 1 (first injector) and an injector 2 (second injector) adapted to receive molten plastic and inject it into the mold alternately to each other; in particular, the injector 1 and the injector 2 are connected to the same tubing 5, or conduit, used to carry the molten plastic injected by the injectors 1, 2 towards the mold;
- a conduit 8, or tubing, adapted to carry molten plastic from a plasticization apparatus 102 towards the injector 1 and towards the injector 2, the conduit 8 being in particular adapted to be connected to the plasticization apparatus 102;
- an injector 3 (third injector) connected to the conduit 8 so as to receive molten plastic from the conduit 8 and inject it into the conduit 8, in particular then inject it into the conduit 8.

In particular, the injector 1 and the injector 2 are adapted to inject molten plastic into the mold, in particular into the same mold, through the same nozzle 54.

The injection apparatus 100 is in particular configured so that, if a condition occurs in which the molten plastic is prevented from entering into both the injector 1 and the injector 2 (simultaneously), the molten plastic from the conduit 8 is received by the injector 3 (i.e., in the injector 3) and then, when the molten plastic is allowed to enter into the injector 1 or the injector 2, the injector 3 injects the molten plastic present inside the injector 3 into the conduit 8.

Each of the injectors 1, 2 comprises a body 11, 21 adapted to receive the molten plastic, a piston 12, 22 adapted to slide in the body 11, 21, and actuation means 14, 24, constrained to the piston 12, 22. The actuation means 14, 24 are adapted to move the piston 12, 22. The actuation means 14, 24 preferably comprise or consist of an actuation cylinder, preferably a hydraulic cylinder. In particular, each piston 12, 22 is adapted to slide along a respective axis X', X" which preferably is the longitudinal axis of the respective injector 1, 2.

The injector 3 comprises a body 31 adapted to receive the molten plastic, a piston 32 adapted to slide in the body 31, and actuation means 34 constrained to the piston 32. The actuation means 34 are adapted to move the piston 32. The actuation means 34 preferably comprise or consist of an actuation cylinder, preferably a hydraulic cylinder. In particular, each piston 32 is adapted to slide along an axis X‴, which is preferably the longitudinal axis of the injector 3.

Each injector 1, 2, 3, in particular the respective body 11, 21, 31, is provided with a respective opening through which the molten plastic can pass for entering and exiting the injector 1, 2, 3.

The molten plastic is received in the space delimited, in particular, by the body 11, 21, 31 and by the piston 12, 22, 32 of each injector 1, 2, 3.

In particular, the actuation means 34 of the injector 3, are adapted to cause the piston 32 to move forward (towards the opening for the passage of the molten plastic of the body 31), in particular at a controlled speed, to inject the molten plastic into the conduit 8. Furthermore, advantageously, the actuation means 34 are adapted to control the backward movement of the piston 32 of the injector 3 while it receives the molten plastic from the conduit 8.

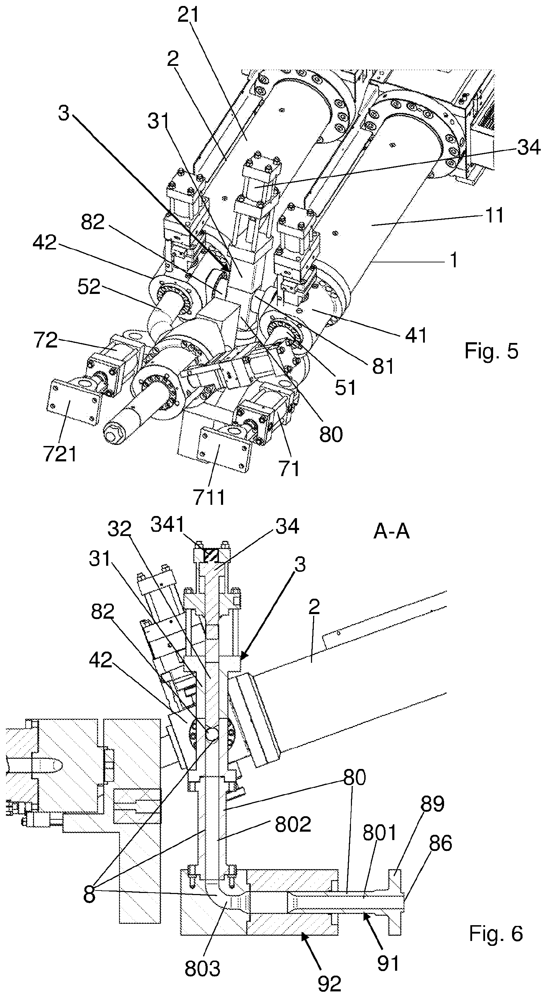

Preferably, there is provided at least one transducer 341 (shown diagrammatically in Figure 6) adapted to detect the pressure of the molten plastic which is inside the injector 3, in particular during the backward movement of the piston 32.

It is preferable that the injection apparatus 100 is configured to control the backward movement of the piston 32, in particular the backward movement speed, of the injector 3 while it receives the molten plastic, so that the pressure of the molten plastic in the injector 3 is constant, or substantially constant, during the backward movement of the piston 32.

For example, said at least one transducer 341 can be arranged so as to be adapted to detect the hydraulic pressure of the hydraulic cylinder and thus the transducer 341 is adapted to detect the pressure of the molten plastic in the injector 3.

The injection apparatus 100 preferably comprises an electronic control unit configured to control the displacement of the piston 32 as a function of the pressure values detected by said at least one transducer 341, in particular so as to keep the pressure of the molten plastic in the injector 3 constant, or substantially constant. Preferably, the third injector 3 has a lower molten plastic loading capacity than the loading capacity of the injector 1 and than the loading capacity of the injector 2; preferably from 5 to 50 times, e.g., from 20 to 25 times, or from 10 to 60 times, e.g., from 25 to 30 times lower than the injector 1 and the injector 2.

In other words, the injector 3 is configured to receive a maximum amount of molten plastic therein (in particular, when the piston 32 is in the fully back position), which is lower than the maximum amount of molten plastic that the injector 1 can receive and lower than the maximum amount of molten plastic that the injector 2 can receive, in particular when the respective piston 12, 22 is in the fully back position. Preferably, the injector 1 and the injector 2 have the same loading capacity, or substantially the same loading capacity.

Preferably, the injection apparatus 100, in particular the injector 3, is configured to inject molten plastic at a lower injection speed than the injection speed of the injector 1 and the injector 2, i.e., the injector 3 is configured to inject molten plastic at a lower injection speed than the injection speed of each of the injectors 1, 2, preferably from 4 to 10 times lower.

The injector 3 thus injects the molten plastic slowly and therefore undesired pressure peaks are avoided.

The injectors 1, 2 are preferably configured to inject molten plastic at the same injection speed.

The injection apparatus 100 is configured so that the two injectors 1, 2 can receive the molten plastic and inject it into the mold alternately to each other.

In particular, the apparatus 100 is configured so that while one of the injectors 1 receives the molten plastic (i.e., it is filled, loading step), the other injector 2 injects the molten plastic (and is therefore emptied, injection step).

Preferably, the injection apparatus 100 comprises two valves 41, 42, in particular one valve 41, 42 for each injector 1, 2. Preferably, the valves 41, 42 are spool valves. The valves 41, 42 are used to allow loading one of the injectors 1, 2 with molten plastic and injecting the molten plastic which exits from another injector 1, 2 in an alternate manner.

In particular, the injection apparatus 100 comprises:
- a valve 41 connected to the conduit 8, adapted to allow or prevent a molten plastic flow from the conduit 8 to the injector 1, in particular as a function of the position or configuration thereof; and
- a valve 42 connected to the conduit 8, adapted to allow or prevent a molten plastic flow from the conduit 8 to the injector 2, in particular as a function of the position or configuration thereof.

In particular, the injector 3 is connected to the conduit 8 upstream, in particular fluidly upstream, of the valve 41 and the valve 42.

In particular, each valve 41, 42 is adapted to take a first position, in which it allows the passage of molten plastic from the conduit 8 to the respective injector 1, 2 (loading step) and prevents the passage of molten plastic from the respective injector 1, 2 towards the mold; and a second position, in which it allows the passage of molten plastic from the respective injector 1, 2 towards the mold (injection step) and prevents the passage of molten plastic from the conduit 8 to the respective injector 1, 2.

The injection apparatus 100 is configured to control the valve 41 and the valve 42 so that while the valve 41 is in the first position thereof, the valve 42 is in the second position thereof, and vice versa. In fact, the injection apparatus 100 is configured to cause the valve 41 to move from the first position to the second position, and vice versa; and to cause the valve 42 to move from the first position to the second position, and vice versa.

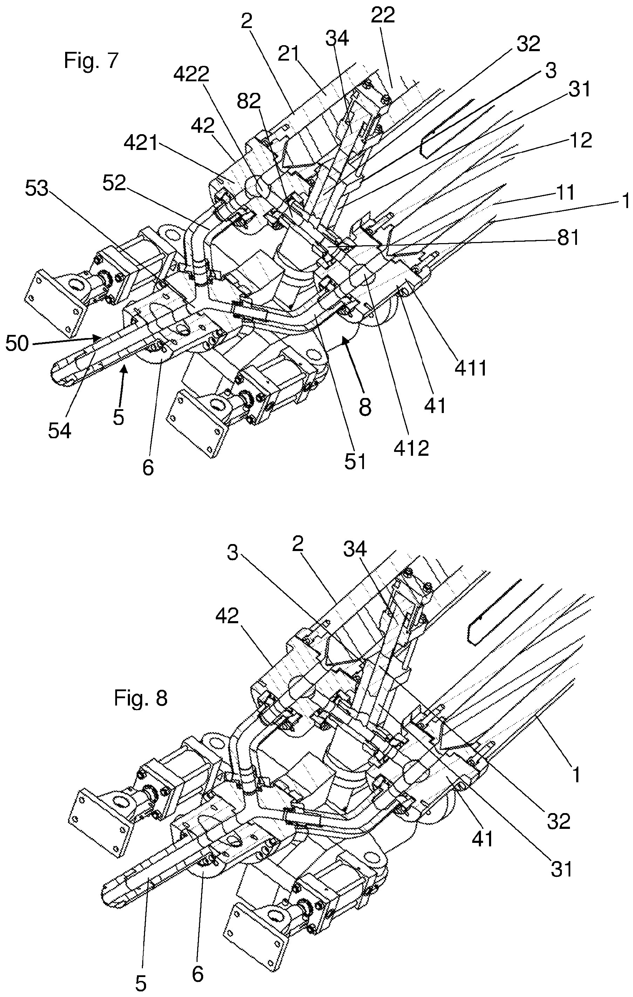

Figure 7 shows, by way of a non-limiting example, a moment in which the injector 2 is about to start the loading step and the injector 1 has completed the injection step. The valve 41 is in the second position thereof and the valve 42 is in the first position thereof. Preferably, in this condition, the piston 32 of the injector 3 substantially remains still, preferably in a forward position, e.g., fully or almost fully forward position.

For the injectors 1, 2 to inject the molten plastic into the mold alternately, the two valves 41, 42 need to switch the position thereof.

It may happen that a condition occurs, in which both valves 41, 42 prevent the passage of molten plastic from the conduit 8 to the respective injector 1, 2, as shown for example in Figure 8.

This condition may occur, for example, in an initial (transitory) step of the position change of the two valves 41, 42; or for example, due to a delay in the position change of the valves 41, 42.

Advantageously, in this condition, the molten plastic from the conduit 8 can be received in the injector 3. In particular, the piston 32 moves backward so that the molten plastic can enter the injector 3. Therefore, a fluid hammer is avoided from occurring, in particular in the conduit 8. The molten plastic inside the injector 3 can then be injected into the conduit 8 when one of the two valves 41, 42 allows the molten plastic to enter into the respective injector 1, 2.

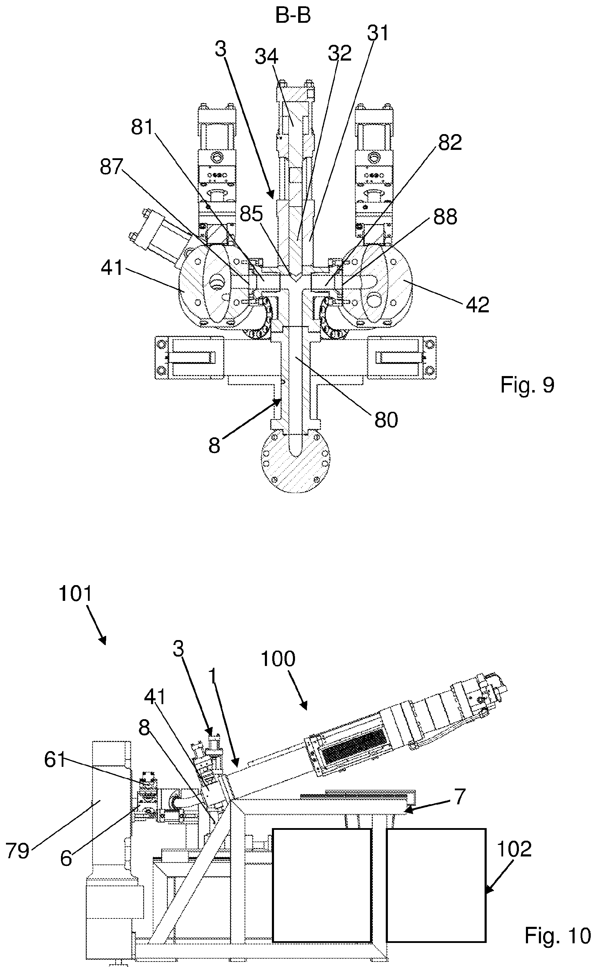

In particular, the aforesaid conduit 8 has an inlet section or opening 86 (Figure 6) for the entry of the molten plastic, and three outlet sections or openings 85, 87, 88 (Figure 9) for the exit of the molten plastic from the conduit 8. The three outlet openings 85, 87, 88 are distinct from one another and distinct from the inlet opening 86. The molten plastic exiting the outlet opening 87 is introduced into the injector 1 (in particular first into the valve 41 and then into the injector 1); the molten plastic exiting the outlet opening 88 is introduced into the injector 2 (in particular first into the valve 42 and then into the injector 2); the molten plastic exiting the outlet opening 85 is introduced into the injector 3.

Preferably, the conduit 8 has only one inlet opening 86 and only three outlet openings 85, 87, 88.

In particular, the inlet opening 86 is adapted to be connected to the plasticization apparatus 102.

An end portion 89 of the conduit 8 is provided with said inlet opening 86.

The conduit 8 comprises a stretch 80 and two branches 81, 82. The two branches 81, 82 are connected to the stretch 80 so as to receive the molten plastic from the stretch 80. The two branches 81, 82 are preferably transverse to the stretch 80. The stretch 80 is provided with the inlet opening 86, and each branch 81, 82 is provided with a respective outlet opening 87, 88. The branch 81 is adapted to carry the molten plastic towards the injector 1 and the branch 82 is adapted to carry the molten plastic towards the second injector 2.

The valve 41 is connected to the branch 81 so as to receive molten plastic therefrom; and the valve 42 is connected to the branch 82 so as to receive molten plastic therefrom.

In particular, the body 411, 421 of each valve 41, 42 is connected to a respective branch 81, 82.

The injector 3 is preferably connected to the conduit 8 so as to receive molten plastic from said stretch 80 of the conduit 8, preferably directly from stretch 80. The body 31 of the injector 3 is preferably fixed to the conduit 8, in particular to a wall delimiting the conduit 8.

The injection apparatus 100 is in particular configured so that the molten plastic from the plasticization apparatus 102 is introduced into the conduit 8, in particular into the stretch 80 and then into the branches 81, 82.

The conduit 8, preferably extends from the inlet opening 86 for the molten plastic to the three outlet sections or openings 85, 87, 88; in particular to the outlet opening 87 (in particular to the valve 41), to the outlet opening 88 (in particular to the valve 42) and to the outlet opening 85.

In some variants, not shown, the number of valves for controlling the molten plastic flow towards the injectors 1, 2 can be greater than two, e.g., three.

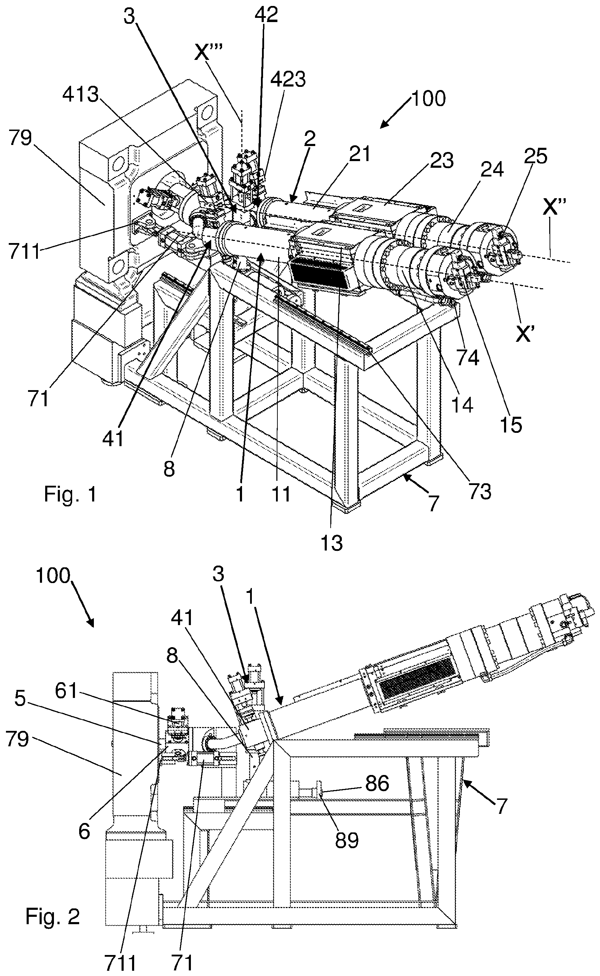

For the actuation of each valve 41, 42, in particular to cause each valve 41, 42 to move from the first position to the second position and vice versa, actuation means 413, 423 are provided (Figure 1) for each valve 41, 42. For example, there is provided a respective actuation cylinder for each valve 41, 42.

The body 411, 421 of each valve 41, 42 is preferably fixed to the respective injector 1, 2. In particular, the body 411, 421 of each valve 41, 42 is fixed to the end portion of the respective injector 1, 2 where the opening for the entry and exit of molten plastic of the respective injector 1, 2, is present.

Inside the body 411, 421 of each valve 41, 42 there is a respective movable element 412, 422. Each movable element 412, 422 preferably defines a conduit which, in a position of the respective valve 41, 42, can (fluidly) communicate with the conduit 8 and the opening of the respective injector 1, 2. Each movable element 412, 422 also defines another conduit which, in another position of the respective valve 41, 42, can (fluidly) communicate with the opening of the respective injector 1, 2 and the tubing 5, in particular with a respective branch 51, 52 of the tubing 5.

Each of the aforesaid actuation means 413, 423 is adapted to move a respective movable element 412, 422.

The length of said conduit 8 is preferably shorter than the length Ltot, in particular than the total length, of each of the two injectors 1, 2 along the respective longitudinal axis X', X".

In particular, the "length" of the conduit 8 means the length of the path traveled by the molten plastic when crossing the whole conduit 8, i.e., when crossing the conduit 8 from the beginning to the end thereof, in particular from the inlet opening 86 to the three outlet sections or openings 85, 87, 88.

The length of the conduit 8 comprises the length of the stretch 80, and the length of each of the two branches 81, 82; in particular, the length of the conduit 8 is preferably equal to the sum of the length of the stretch 80, and of the length of each of the two branches 81, 82.

The aforesaid stretch 80 preferably comprises a stretch 801 (Figure 6) which is substantially horizontal, or in any case parallel to the support surface of the injection apparatus 100.

Stretch 801 preferably has the aforesaid inlet opening 86.

The aforesaid stretch 80 preferably comprises two stretches 801, 802 (or sub-stretches or portions) which are transverse to each other, e.g., orthogonal to each other. The first stretch 80 can have, for example, a substantially L shape. The two stretches 801, 802 are joined to each other by a connection stretch 803. In particular, the connection stretch 803 is substantially an elbow (i.e., it is curved).

Part of the conduit 8 is preferably delimited by a component, e.g., a T-shaped- or Y-shaped tube, comprising said two branches 81, 82. In particular, said T- or Y-shaped component also comprises part of the stretch 80 of conduit 8, in particular part of stretch 802.

Said length Ltot of each injector 1, 2 comprises the length Lcm of said body 11, 21 and the length Lhc of said actuation means 14, 24 (the length Lhc is also measured along the longitudinal axis X', X").

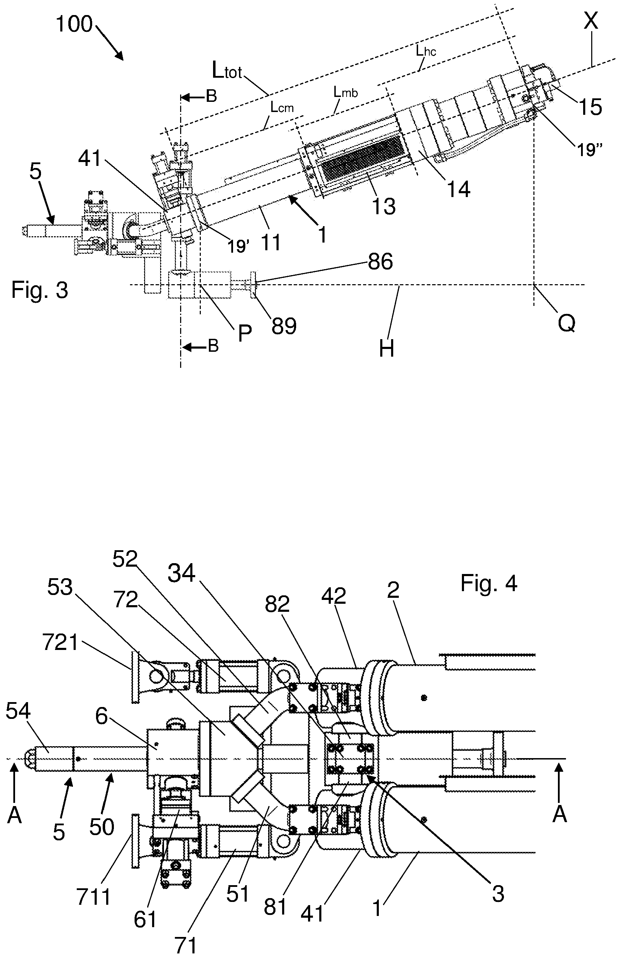

In particular, each injector 1, 2 has a first axial end 19' (Figure 3) and a second axial end 19"; the first axial end 19' delimits the opening of said body 11, 21 through which the molten plastic can pass, in particular to enter and exit the body 11, 21; the second axial end 19' 'is an end of said actuation means 14, 24, in particular the distal end from the opening of the body 11, 21; and said length Ltot of each injector 1, 2 is the distance, in particular along the respective longitudinal axis X', X", from the first axial end 19' to the second axial end 19".

The actuation means 14, 24 are preferably connected to the respective body 11, 21 by a respective connection body 13, 23, extending between the body 11, 21 and the actuation means 14, 24.

In this case, said length Ltot of each injector 1, 2 comprises the length Lcm of said body 11, 21, the length Lmb (along the longitudinal axis X', X") of the connection body 13, 23 and the length Lhc of said actuation means 14, 24.

A valve 15, 25, in particular a proportional valve, can be connected to the actuation means 14, 24.

Preferably, said length Ltot of each injector 1, 2 does not comprise the length of the valve 15, 25.

Preferably, but not exclusively, the two injectors 1, 2 are parallel to each other; in particular, the longitudinal axes thereof are parallel to each other. Alternatively, the two injectors 1, 2 can be transverse to or aligned with each other.

In particular, the two injectors 1, 2 have the same length Ltot.

The two injectors 1, 2 are preferably equal to each other.

The length Ltot of each injector 1, 2 is preferably from 2500 mm to 3300 mm; and/or the length Lcm of each body 11, 21 is from 700 mm to 1200 mm; and/or the length Lhc of the actuation means 14, 24 is from 800 mm to 1300 mm; and/or the length Lmb of the connection body 13, 23 is from 600 mm to 1100 mm.

Preferably, but not exclusively, the injection apparatus 100 has one or more of the following features (also combined together):
- the length of the conduit 8 is at least 1.5 times shorter, preferably from 1.6 to 2.2 times shorter than said length Ltot; and/or
- the length of the conduit 8 is shorter than the length Lcm of the body 11, 21 along the longitudinal axis X', X" of the injector 1, 2; and/or
- the inner volume of the conduit 8 is less, preferably equal to half or less, than the maximum inner volume, which can receive the molten plastic, of each injector 1, 2 (i.e., less than the loading capacity of each injector 1, 2); where, in particular, the inner volume of the conduit 8 is the whole volume which can receive the molten plastic, and the maximum inner volume of an injector 1,2 is the volume delimited by the body 11, 12 and the piston 12, 22 when the piston 12, 22 is in the fully back position (i.e., distal from the opening of the injector 1, 2);
- the ratio between the length and the inner diameter of said conduit 8 is from 25 to 50; in particular, the inner diameter can be constant along the conduit 8 or variable, and in this latter case the average inner diameter is considered for the aforesaid length/inner diameter ratio; and/or
- the end portion 89 of the conduit 8 adapted to be connected to the plasticization apparatus 102, in particular the inlet opening 86, is arranged in the space between the orthogonal projections P, Q of the axial ends 19', 19" (Figure 3) of each injector 1, 2 on a horizontal plane H, parallel to the support surface of the injection apparatus 100; in particular, the end portion 89 (more in particular, the inlet opening 86) is preferably at a distance (along the horizontal plane H) from said orthogonal projection P of the end 19' which is less than Ltot x cosα, where α is the angle formed by the longitudinal axes X, X' with the horizontal plane H; said distance is preferably less than Lcm x cosα.

Each of the aforesaid features allows obtaining a better optimization, in particular a greater reduction, in the volume that the molten plastic must cross to reach the injectors 1, 2.

In any case (in all embodiments), the inner diameter of the conduit 8, in particular of stretch 80 and branches 81, 82 is preferably from 30 mm to 50 mm. In particular, the inner diameter of the conduit 8 is selected in this range so as to minimize the undesired effects on the molten plastic, including the formation of undesired substances, e.g., due to excessive sheer stress.

The end portion 89 of the conduit 8, in particular the inlet opening 86, adapted to be connected to the plasticization apparatus 102 is preferably arranged in the space below, in particular below and at, or above, in particular above and at, the two injectors 1, 2.

Said end portion 89 preferably comprises a flange for the connection with the plasticization apparatus 102.

The apparatus 100, as already mentioned, also comprises a tubing 5 or channel, used to carry the molten plastic injected by the injectors 1, 2 towards the mold.

The tubing 5 comprises a stretch 50 adapted to receive the molten plastic from the injectors 1, 2. In particular, the stretch 50 can receive both the molten plastic injected by the injector 1 and the molten plastic injected by the injector 2.

The tubing 5 also comprises two branches 51, 52 or stretches. Each branch 51, 52 is adapted to receive the molten plastic from a respective injector 1, 2; i.e., each stretch 51, 52 is adapted to receive a respective molten plastic flow from a respective injector 1, 2. In particular, each branch 51, 52 is connected to an outlet of a respective valve 41, 42.

Stretch 50 is connected to the two branches 51, 52. In particular, the two branches 51, 52 converge in stretch 50, i.e., the molten plastic flow exiting each branch 51, 52, is introduced into stretch 50. In particular, stretch 50 is fluidly downstream of the branches 51, 52.

A valve 6 is preferably provided along said stretch 50 of the tubing 5.

Stretch 50 preferably comprises a first stretch 53 and a second stretch 54 (or sub-stretches), both connected to the valve 6. In particular, stretch 53 is upstream of the valve 6 and stretch 54 is downstream of the valve 6. Stretch 54 is substantially a nozzle.

In particular, as a function of its position, the valve 6 is adapted to allow or prevent the passage of molten plastic towards the mold.

The valve 6, in a first position, allows the passage of molten plastic towards the mold, and in a second position, allows the molten plastic to exit the stretch 50 (preventing the molten plastic from reaching the mold), in particular for carrying out a purging operation.

Actuation means 61, e.g., an actuation cylinder, are provided for actuating the valve 6.

In particular, the valve 6 is only used during the purging step. In particular, the purging step is the step of starting the molding apparatus 101 (which comprises the injection apparatus 100 and the plasticization apparatus 102). Basically, instead of injecting the first loads of molten plastic (e.g., molten PET) of each injector 1, 2 directly into the mold, it is preferable to discard such a material into a collection tray (not shown), which in particular is outside the tubing 5. This is because the first material can be highly degraded having spent a long time inside the plasticization apparatus 102 during the heating step, before the starting at full operation. Injecting it into the mold would result in filling it with highly degraded material which is then also difficult to remove.

The injection apparatus 100 preferably comprises a body 79 to which the tubing 5 is connected, in particular to stretch 50, more in particular to stretch 54. The body 79 is configured to be connected to the mold.

Two actuation cylinders, preferably two hydraulic cylinders 71, 72 are preferably provided to allow operations of maintenance and special cleaning, e.g., the removal of stretch 54 (or nozzle). The hydraulic cylinders 71, 72 allow the injectors 1, 2 to move backward, i.e., they allow displacing them away from the mold, and they allow the injectors 1, 2 to move forward, i.e., they allow displacing them towards the mold. In particular, the two hydraulic cylinders 71, 72 comprise a respective part 711, 721 adapted to push against the body 79. During normal operation (i.e., full operation), after the injection apparatus 100 has been moved forward towards the mold to the working position, the two hydraulic cylinders 71, 72 serve the function of keeping the injection apparatus 100 in contact with the mold as they are adapted to apply a sufficient force to oppose the separation force given by the injection pressure which would tend to separate the nozzle 54 from the mold.

The conduit 8 (in particular stretch 801) is preferably delimited by two parts 91, 92 (Figure 6) adapted to mutually slide, so as to form a telescopic system. In particular, part 91 is preferably inserted into part 92. Part 91 delimits the inlet opening 86 of the conduit 8 and is adapted to be fixed, in particular integrally fixed, to the plasticization apparatus 102. During the aforesaid backward and forward movement of the injectors 1, 2, the part 92 can slide with respect to part 91. In particular, the sliding can occur along an axis substantially horizontal, or in any case parallel to the support surface of the injection apparatus 100. The injection apparatus 100 is preferably configured so that the variation in length of the conduit 8 due to the aforesaid optional telescopic system is at most 150 mm or 100 mm. When the telescopic system is provided, the aforesaid length of the conduit 8 preferably refers to the maximum length obtained when the injectors 1, 2 are in the proximal position with respect to the mold - the position in which the conduit 8 is in the maximum extension thereof (the distal position is obtained when the injectors 1, 2 are translated to the furthest position from the mold by the hydraulic cylinders 71, 72).

The telescopic system is particularly advantageous when the plasticization apparatus 102 is of the type that must be fixed, in particular integrally, to the ground (or in any case to the support surface of the injection apparatus 100), i.e., it is fixed in position. In fact, it allows horizontally translating the injectors 1, 2, 3 and the components integral therewith, including the valves 41, 42, the tubing 5, and the conduit 8, except for part 91 (in fact, part 91 is integral with the plasticization apparatus 102, which is preferably fixed in position).

Preferably, but not exclusively, the two injectors 1, 2 are tilted, preferably by an angle α from 10° to 45°, with respect to a horizontal plane H, parallel to the support surface of the injection apparatus 100.

In particular, the two injectors 1, 2 are preferably tilted so that the end portion 19', where there is provided the opening for the entry and exit of molten plastic from the injector 1, 2 (in particular from the body 11, 21), is further down (i.e., closer to the support surface of the injection apparatus 100) with respect to the end portion 19" which is axially opposite to the end portion 19'.

One of the advantages associated with the tilting of the injectors 1, 2 consists in the optimization of the volumes. In fact, it is thus possible to reduce the horizontal volume of the injection apparatus 100, and it is further possible to arrange at least part of the plasticization apparatus 102 in the space below the injectors 1, 2. The tilting of the injectors 1, 2 allows reducing the length of the conduit 8 and thus it allows reducing the residence time of the molten plastic inside the conduit 8.

The feature related to the tilting of the injectors 1, 2 is thus preferably, but not exclusively, associated with the arrangement of the end portion 89 of the conduit 8 in the space below the injectors 1, 2.

The injection apparatus 100 preferably comprises a support structure 7, adapted to support, in particular, the injectors 1, 2. The injectors 1, 2 are preferably constrained to the support structure 7 so as to slide with respect thereto. To this end, for example, two sliding guides 73, 74 are provided.

The injection apparatus 100 is particularly adapted to be connected and operate with a plasticization apparatus 102 configured to plasticize PET in the form of flakes. In particular, the plasticization apparatus 102 is preferably configured to generate a substantially continuous molten plastic flow.

The plasticization apparatus 102 comprises an extruder. In particular, the extruder is configured to generate a substantially continuous molten plastic flow. Preferably, to this end, the screw of the extruder rotates about the longitudinal axis thereof, preferably at a substantially constant speed, and in particular, it does not move along the longitudinal axis thereof. The plasticization apparatus 102 can comprise other components downstream of the extruder.

The conduit 8, in particular the inlet opening 86 of the conduit 8, is connected in particular to the last component of the plasticization apparatus 102. Preferably, the conduit 8 is the only conduit adapted to carry the molten plastic from the plasticization apparatus 102 towards the two injectors 1, 2 (or to the two injectors 1, 2), i.e., between the plasticization apparatus 102 and the conduit 8 there are not provided other conduits for the molten plastic.

By way of a non-limiting example, a molten plastic pump can optionally be provided, in particular downstream of the extruder. The aforesaid injector 3, which allows avoiding the hydraulic shocks, is particularly advantageous for protecting such a pump. A filter, and optionally a viscometer, is preferably provided upstream of the pump, and a purging valve can be provided downstream of the pump. One or more reactors can also be provided upstream of the extruder, for treating, in particular pretreating, the PET flakes.

Preferably, as already mentioned, the plasticization apparatus 102 is fixed in position, in particular it is integral with the ground. In fact, the plasticization apparatus 102 can have such a weight and volume that it needs to be fixed to the ground, e.g., due to the aforesaid reactors.

The invention is also directed to a molding apparatus 101 for producing one or more hollow articles, comprising an injection apparatus 100 and a plasticization apparatus 102 connected to the conduit 8, so that the molten plastic can move from the plasticization apparatus 102 to the conduit 8.

The invention is also directed to a process for molding one or more hollow articles, in particular bottle preforms, by an injection apparatus 100, or by a molding apparatus 101, in which if a condition occurs, in which the molten plastic is prevented from entering into both the injector 1 and the injector 2 (in particular simultaneously), the molten plastic from the conduit 8 is received by the injector 3 and then, when the molten plastic is allowed to enter into the injector 1 or the injector 2, the injector 3 injects the molten plastic present inside the injector 3 into the conduit 8.

Preferably, in order to inject the molten plastic into the mold, the injector 1 and the injector 2 inject molten plastic at a first injection speed; and when the injector 3 injects the molten plastic contained therein, the injector 3 injects the molten plastic at a second injection speed which is lower than said first injection speed; preferably from 4 to 10 times lower. The injector 3 thus injects the molten plastic slowly, and therefore undesired pressure peaks are avoided.

## Claims

1. An injection apparatus (100) for injecting molten plastic, in particular PET, into a mold for molding bottle preforms;
the injection apparatus (100) comprising
- a first injector (1) and a second injector (2) adapted to receive molten plastic and inject it into the mold alternately to each other;
- a conduit (8) adapted to carry molten plastic from a plasticization apparatus (102) towards the first injector (1) and towards the second injector (2);
- a third injector (3) provided with a piston (32), the third injector (3) being connected to the conduit (8) so as to receive molten plastic from the conduit (8) and then inject it into the conduit (8);
- actuation means (34) adapted to cause the piston (32) of the third injector (3) to move forward to inject the molten plastic into the conduit (8);
wherein the first injector (1) and the second injector (2) are adapted to inject molten plastic into the mold, in particular into the same mold, through the same nozzle (54);
wherein said actuation means (34) are adapted to control the backward movement of the piston (32) of the third injector (3) while it receives the molten plastic from the conduit (8).

2. An injection apparatus (100) according to claim 1, wherein the third injector (3) has a lower molten plastic loading capacity than the loading capacity of the first injector (1) and than the loading capacity of the second injector (2).

3. An injection apparatus (100) according to claim 1 or 2, wherein there is provided at least one transducer (341) adapted to detect the pressure of the molten plastic in the third injector (3) during the backward movement of the piston (32).

4. An injection apparatus (100) according to claim 3, wherein said actuation means (34) comprise a hydraulic cylinder, and wherein said at least one transducer (341) is adapted to detect the hydraulic pressure of the hydraulic cylinder.

5. An injection apparatus (100) according to any one of the preceding claims, wherein the injection apparatus (100) is configured to control the backward movement of the piston (32) of the third injector (3) while it receives the molten plastic so that the pressure of the molten plastic in the third injector (3) is constant or substantially constant during the backward movement of the piston (32).

6. An injection apparatus (100) according to any one of the preceding claims, comprising
- a first valve (41) connected to the conduit (8), adapted to allow or prevent a molten plastic flow from the conduit (8) to the first injector (1); and
- a second valve (42) connected to the conduit (8), adapted to allow or prevent a molten plastic flow from the conduit (8) to the second injector (2).

7. An injection apparatus (100) according to claim 6, wherein each valve (41, 42) of said first valve (41) and second valve (42) is adapted to take a first position, in which it allows the passage of molten plastic from the conduit (8) to the respective injector (1, 2) of said first injector (1) and second injector (2) and prevents the passage of molten plastic from the respective injector (1, 2) towards the mold; and a second position, in which it allows the passage of molten plastic from the respective injector (1, 2) towards the mold and prevents the passage of molten plastic from the conduit (8) to the respective injector (1, 2).

8. An injection apparatus (100) according to claim 7, configured to control the first valve (41) and the second valve (42) so that while the first valve (41) is in the first position thereof, the second valve (42) is in the second position thereof, and vice versa.

9. An injection apparatus (100) according to any one of the preceding claims, wherein said conduit (8) comprises a stretch (80) provided with an inlet opening (86); and two branches (81, 82), each branch (81, 82) being provided with a respective outlet opening (87, 88); wherein a first branch (81) of said two branches (81, 82) is adapted to carry the molten plastic towards the first injector (1) and a second branch (82) of said two branches (81, 82) is adapted to carry the molten plastic towards the second injector (2).

10. An injection apparatus (100) according to claim 9 depending on claim 6, 7 or 8, wherein the first valve (41) is connected to the first branch (81) so as to receive molten plastic therefrom; and wherein the second valve (42) is connected to the second branch (82) so as to receive molten plastic therefrom.

11. An injection apparatus (100) according to claim 9 or 10, wherein the third injector (3) is adapted to receive molten plastic from said stretch (80) of the conduit (8).

12. An injection apparatus (100) according to any one of the preceding claims, wherein the third injector (3) is configured to inject molten plastic at a lower injection speed than the injection speed of the first injector (1) and the second injector (2).

13. A molding apparatus (101) for producing one or more hollow articles, comprising an injection apparatus (100) according to any one of the preceding claims, and a plasticization apparatus (102) connected to the conduit (8), so that the molten plastic can move from the plasticization apparatus (102) to the conduit (8).

14. A process for molding bottle preforms by an injection apparatus (100) according to any one of claims 1 to 12 or by a molding apparatus (101) according to claim 13,
wherein, if a condition occurs, in which the molten plastic is prevented from entering into both the first injector (1) and the second injector (2), the molten plastic from the conduit (8) is received by the third injector (3) and then, when the molten plastic is allowed to enter into the first injector (1) or the second injector (2), the third injector (3) injects the molten plastic present inside the third injector (3) into the conduit (8).

15. A process according to claim 14, wherein in order to inject the molten plastic into the mold, the first injector (1) and the second injector (2) inject molten plastic at a first injection speed; and wherein when the third injector (3) injects the molten plastic contained therein, the third injector (3) injects the molten plastic at a second injection speed which is lower than said first injection speed; preferably from 4 to 10 times lower.

## Patentansprüche

1. Injektionsvorrichtung (100) zum Einspritzen von geschmolzenem Kunststoff, insbesondere PET, in eine Form zum Formen von Flaschenvorformlingen;
wobei die Injektionsvorrichtung (100) umfasst
- einen ersten Injektor (1) und einen zweiten Injektor (2), die dazu geeignet sind, geschmolzenen Kunststoff aufzunehmen und ihn abwechselnd zueinander in die Form einzuspritzen;
- eine Leitung (8), die dazu geeignet ist, geschmolzenen Kunststoff von einer Plastifizierungsvorrichtung (102) zu dem ersten Injektor (1) und zu dem zweiten Injektor (2) zu befördern;
- einen dritten Injektor (3), der mit einem Kolben (32) versehen ist, wobei der dritte Injektor (3) mit der Leitung (8) verbunden ist, um geschmolzenen Kunststoff aus der Leitung (8) aufzunehmen und ihn dann in die Leitung (8) einzuspritzen;
- Betätigungsmittel (34), die dazu geeignet sind, den Kolben (32) des dritten Injektors (3) zu veranlassen, sich vorwärts zu bewegen, um den geschmolzenen Kunststoff in die Leitung (8) einzuspritzen;
wobei der erste Injektor (1) und der zweite Injektor (2) dazu geeignet sind, geschmolzenen Kunststoff durch dieselbe Düse (54) in die Form, insbesondere in dieselbe Form, einzuspritzen;
wobei die Betätigungsmittel (34) dazu geeignet sind, die Rückwärtsbewegung des Kolbens (32) des dritten Injektors (3) zu steuern, während er den geschmolzenen Kunststoff aus der Leitung (8) aufnimmt.

2. Injektionsvorrichtung (100) nach Anspruch 1, wobei der dritte Injektor (3) eine geringere Ladekapazität für geschmolzenen Kunststoff aufweist als die Ladekapazität des ersten Injektors (1) und als die Ladekapazität des zweiten Injektors (2).

3. Injektionsvorrichtung (100) nach Anspruch 1 oder 2, wobei mindestens ein Messwandler (341) vorgesehen ist, der dazu geeignet ist, den Druck des geschmolzenen Kunststoffs im dritten Injektor (3) während der Rückwärtsbewegung des Kolbens (32) zu erfassen.

4. Injektionsvorrichtung (100) nach Anspruch 3, wobei die Betätigungsmittel (34) einen Hydraulikzylinder umfassen, und wobei der mindestens eine Messwandler (341) dazu geeignet ist, den hydraulischen Druck des Hydraulikzylinders zu erfassen.

5. Injektionsvorrichtung (100) nach einem der vorhergehenden Ansprüche, wobei die Injektionsvorrichtung (100) dazu konfiguriert ist, die Rückwärtsbewegung des Kolbens (32) des dritten Injektors (3) zu steuern, während er den geschmolzenen Kunststoff aufnimmt, so dass der Druck des geschmolzenen Kunststoffs in dem dritten Injektor (3) während der Rückwärtsbewegung des Kolbens (32) konstant oder im Wesentlichen konstant ist.

6. Injektionsvorrichtung (100) nach einem der vorhergehenden Ansprüche, umfassend
- ein erstes Ventil (41), das mit der Leitung (8) verbunden ist und dazu geeignet ist, eine Strömung von geschmolzenem Kunststoff von der Leitung (8) zu dem ersten Injektor (1) zuzulassen oder zu verhindern; und
- ein zweites Ventil (42), das mit der Leitung (8) verbunden ist und dazu geeignet ist, eine Strömung von geschmolzenem Kunststoff von der Leitung (8) zu dem zweiten Injektor (2) zuzulassen oder zu verhindern.

7. Injektionsvorrichtung (100) nach Anspruch 6, wobei jedes Ventil (41, 42) des ersten Ventils (41) und des zweiten Ventils (42) dazu geeignet ist, eine erste Position einzunehmen, in der es den Durchgang von geschmolzenem Kunststoff von der Leitung (8) zu dem jeweiligen Injektor (1, 2) des ersten Injektors (1) und des zweiten Injektors (2) zulässt und den Durchgang von geschmolzenem Kunststoff von dem jeweiligen Injektor (1, 2) zu der Form verhindert; und eine zweite Position, in der es den Durchgang von geschmolzenem Kunststoff von dem jeweiligen Injektor (1, 2) zu der Form zulässt und den Durchgang von geschmolzenem Kunststoff von der Leitung (8) zu dem jeweiligen Injektor (1, 2) verhindert.

8. Injektionsvorrichtung (100) nach Anspruch 7, die dazu konfiguriert ist, das erste Ventil (41) und das zweite Ventil (42) so zu steuern, dass, während sich das erste Ventil (41) in seiner ersten Position befindet, sich das zweite Ventil (42) in seiner zweiten Position befindet und umgekehrt.

9. Injektionsvorrichtung (100) nach einem der vorhergehenden Ansprüche, wobei die Leitung (8) einen Abschnitt (80), der mit einer Einlassöffnung (86) versehen ist, und zwei Verzweigungen (81, 82) umfasst, wobei jede Verzweigung (81, 82) mit einer jeweiligen Auslassöffnung (87, 88) versehen ist; wobei eine erste Verzweigung (81) der beiden Verzweigungen (81, 82) dazu geeignet ist, den geschmolzenen Kunststoff zu dem ersten Injektor (1) zu befördern, und eine zweite Verzweigung (82) der beiden Verzweigungen (81, 82) dazu geeignet ist, den geschmolzenen Kunststoff zu dem zweiten Injektor (2) zu befördern.

10. Injektionsvorrichtung (100) nach Anspruch 9, der von Anspruch 6, 7 oder 8 abhängt, wobei das erste Ventil (41) mit der ersten Verzweigung (81) verbunden ist, um von dort geschmolzenen Kunststoff aufzunehmen; und wobei das zweite Ventil (42) mit der zweiten Verzweigung (82) verbunden ist, um von dort geschmolzenen Kunststoff aufzunehmen.

11. Injektionsvorrichtung (100) nach Anspruch 9 oder 10, wobei der dritte Injektor (3) dazu geeignet ist, geschmolzenen Kunststoff von dem Abschnitt (80) der Leitung (8) aufzunehmen.

12. Injektionsvorrichtung (100) nach einem der vorhergehenden Ansprüche, wobei der dritte Injektor (3) dazu konfiguriert ist, geschmolzenen Kunststoff mit einer niedrigeren Einspritzgeschwindigkeit als die Einspritzgeschwindigkeit des ersten Injektors (1) und des zweiten Injektors (2) einzuspritzen.

13. Formvorrichtung (101) zur Herstellung eines oder mehrerer Hohlkörper, umfassend eine Injektionsvorrichtung (100) nach einem der vorhergehenden Ansprüche und eine Plastifizierungsvorrichtung (102), die mit der Leitung (8) verbunden ist, so dass sich der geschmolzene Kunststoff von der Plastifizierungsvorrichtung (102) zu der Leitung (8) bewegen kann.

14. Verfahren zum Formen von Flaschenvorformlingen mit einer Injektionsvorrichtung (100) nach einem der Ansprüche 1 bis 12 oder mit einer Formvorrichtung (101) nach Anspruch 13,
wobei, wenn ein Zustand eintritt, in dem der geschmolzene Kunststoff daran gehindert wird, sowohl in den ersten Injektor (1) als auch in den zweiten Injektor (2) einzutreten, der geschmolzene Kunststoff aus der Leitung (8) von dem dritten Injektor (3) aufgenommen wird und dann, wenn zugelassen wird, dass der geschmolzene Kunststoff in den ersten Injektor (1) oder den zweiten Injektor (2) eintritt, der dritte Injektor (3) den in dem dritten Injektor (3) vorhandenen geschmolzenen Kunststoff in die Leitung (8) einspritzt.

15. Verfahren nach Anspruch 14, wobei zum Einspritzen des geschmolzenen Kunststoffs in die Form der erste Injektor (1) und der zweite Injektor (2) geschmolzenen Kunststoff mit einer ersten Einspritzgeschwindigkeit einspritzen; und wobei, wenn der dritte Injektor (3) den darin enthaltenen geschmolzenen Kunststoff einspritzt, der dritte Injektor (3) den geschmolzenen Kunststoff mit einer zweiten Einspritzgeschwindigkeit einspritzt, die niedriger ist als die erste Einspritzgeschwindigkeit, vorzugsweise 4- bis 10-mal niedriger.

## Revendications

1. Appareil d'injection (100) pour injecter du plastique fondu, en particulier du PET, dans un moule pour mouler des préformes de bouteilles ;
l'appareil d'injection (100) comprenant
- un premier injecteur (1) et un deuxième injecteur (2) adaptés pour recevoir du plastique fondu et l'injecter dans le moule alternativement l'un par rapport à l'autre ;
- un conduit (8) adapté pour transporter le plastique fondu d'un appareil de plastification (102) vers le premier injecteur (1) et vers le deuxième injecteur (2)
- un troisième injecteur (3) muni d'un piston (32), le troisième injecteur (3) étant relié au conduit (8) de manière à recevoir le plastique fondu du conduit (8) et puis à l'injecter dans le conduit (8) ;
- des moyens d'actionnement (34) adaptés pour faire avancer le piston (32) du troisième injecteur (3) pour injecter le plastique fondu dans le conduit (8) ;
dans lequel le premier injecteur (1) et le deuxième injecteur (2) sont adaptés pour injecter du plastique fondu dans le moule, en particulier dans le même moule, à travers la même buse (54) ;
dans lequel lesdits moyens d'actionnement (34) sont adaptés pour commander le mouvement vers l'arrière du piston (32) du troisième injecteur (3) alors qu'il reçoit le plastique fondu du conduit (8).

2. Appareil d'injection (100) selon la revendication 1, dans lequel le troisième injecteur (3) a une capacité de charge en plastique fondu inférieure à la capacité de charge du premier injecteur (1) et à la capacité de charge du deuxième injecteur (2).

3. Appareil d'injection (100) selon la revendication 1 ou 2, dans lequel il est prévu au moins un transducteur (341) adapté pour détecter la pression du plastique fondu dans le troisième injecteur (3) pendant le mouvement vers l'arrière du piston (32).

4. Appareil d'injection (100) selon la revendication 3, dans lequel lesdits moyens d'actionnement (34) comprennent un cylindre hydraulique, et dans lequel ledit au moins un transducteur (341) est adapté pour détecter la pression hydraulique du cylindre hydraulique.

5. Appareil d'injection (100) selon l'une quelconque des revendications précédentes, dans lequel l'appareil d'injection (100) est configuré pour commander le mouvement vers l'arrière du piston (32) du troisième injecteur (3) pendant qu'il reçoit le plastic fondu de sorte que la pression du plastique fondu dans le troisième injecteur (3) soit constante ou sensiblement constante pendant le mouvement vers l'arrière du piston (32).

6. Appareil d'injection (100) selon l'une quelconque des revendications précédentes, comprenant
- une première vanne (41) reliée au conduit (8), adaptée pour permettre ou empêcher un écoulement de plastique fondu du conduit (8) vers le premier injecteur (1) ; et
- une deuxième vanne (42) reliée au conduit (8), adaptée pour permettre ou empêcher un écoulement de plastique fondu du conduit (8) vers le deuxième injecteur (2).

7. Appareil d'injection (100) selon la revendication 6, dans lequel chaque vanne (41, 42) de lesdites première vanne (41) et deuxième vanne (42) est adaptée pour prendre une première position, dans laquelle elle permet le passage du plastique fondu du conduit (8) vers l'injecteur respectif (1, 2) desdits premier injecteur (1) et deuxième injecteur (2) et empêche le passage du plastique fondu de l'injecteur respectif (1, 2) vers le moule ; et une deuxième position, dans laquelle elle permet le passage du plastique fondu de l'injecteur respectif (1, 2) vers le moule et empêche le passage du plastique fondu du conduit (8) vers l'injecteur respectif (1, 2).

8. Appareil d'injection (100) selon la revendication 7, configuré pour commander la première vanne (41) et la deuxième vanne (42) de sorte que lorsque la première vanne (41) est dans sa première position, la deuxième vanne (42) est dans sa deuxième position, et vice versa.

9. Appareil d'injection (100) selon l'une quelconque des revendications précédentes, dans lequel ledit conduit (8) comprend un tronçon (80) muni d'une ouverture d'entrée (86) ; et deux branches (81, 82), chaque branche (81, 82) étant munie d'une ouverture de sortie respective (87, 88) ; dans lequel une première branche (81) desdites deux branches (81, 82) est adaptée pour transporter le plastique fondu vers le premier injecteur (1) et une deuxième branche (82) desdites deux branches (81, 82) est adaptée pour transporter le plastique fondu vers le deuxième injecteur (2).

10. Appareil d'injection (100) selon la revendication 9 dépendante de la revendication 6, 7 ou 8, dans lequel la première vanne (41) est reliée à la première branche (81) de manière à recevoir du plastique fondu de celle-ci ; et dans lequel la deuxième vanne (42) est reliée à la deuxième branche (82) de manière à recevoir du plastique fondu de celle-ci.

11. Appareil d'injection (100) selon la revendication 9 ou 10, dans lequel le troisième injecteur (3) est adapté pour recevoir le plastique fondu provenant dudit tronçon (80) du conduit (8).

12. Appareil d'injection (100) selon l'une quelconque des revendications précédentes, dans lequel le troisième injecteur (3) est configuré pour injecter du plastique fondu à une vitesse d'injection inférieure à la vitesse d'injection du premier injecteur (1) et du deuxième injecteur (2).

13. Appareil de moulage (101) pour produire un ou plusieurs articles creux, comprenant un appareil d'injection (100) selon l'une quelconque des revendications précédentes, et un appareil de plastification (102) relié au conduit (8), de sorte que le plastique fondu peut se déplacer de l'appareil de plastification (102) au conduit (8).

14. Procédé de moulage de préformes de bouteilles par un appareil d'injection (100) selon l'une quelconque des revendications 1 à 12, ou par un appareil de moulage (101) selon la revendication 13,
dans lequel, si une condition se produit, dans laquelle le plastique fondu est empêché d'entrer à la fois dans le premier injecteur (1) et le deuxième injecteur (2), le plastique fondu provenant du conduit (8) est reçu par le troisième injecteur (3) et puis, lorsque le plastique fondu est autorisé à entrer dans le premier injecteur (1) ou le deuxième injecteur (2), le troisième injecteur (3) injecte le plastique fondu présent à l'intérieur du troisième injecteur (3) dans le conduit (8).

15. Procédé selon la revendication 14, dans lequel afin d'injecter le plastique fondu dans le moule, le premier injecteur (1) et le deuxième injecteur (2) injectent du plastique fondu à une première vitesse d'injection ; et dans lequel lorsque le troisième injecteur (3) injecte le plastique fondu contenu dans celui-ci, le troisième injecteur (3) injecte le plastique fondu à une deuxième vitesse d'injection qui est inférieure à ladite première vitesse d'injection ; de préférence de 4 à 10 fois inférieure.
